**Europäisches Patentamt**

**European Patent Office**

**Office européen des brevets**

(19)

(11) Numéro de publication: **0 085 400**

**A1**

# (12) DEMANDE DE BREVET EUROPEEN

(21) Numéro de dépôt: **83100751.3**

(22) Date de dépôt: **27.01.83**

(51) Int. Cl.³: **H 01 M 4/74**

(30) Priorité: **01.02.82 FR 8201567**

(43) Date de publication de la demande:
**10.08.83 Bulletin 83/32**

(84) Etats contractants désignés:
**AT BE CH DE FR GB IT LI LU NL SE**

(71) Demandeur: **COMPAGNIE EUROPEENNE D'ACCUMULATEURS Société anonyme dite:**
**16, rue de la Baume**
**F-75008 Paris(FR)**

(71) Demandeur: **J. BROCHIER ET FILS (Société Anonyme dite)**
**33, avenue Franklin Roosevelt**
**F-69150 Decines-Charpieu(FR)**

(72) Inventeur: **Viala, Jean-Claude c/o Université Claude Bernard**
**Lyon I Lab. Physicochim. Min. I 43 Blvd. du 11 Novembre 1918 F-6922 Villeurbanne Cedex(FR)**

(72) Inventeur: **Bouix, Jean**
**16 avenue Félix Faure**
**F-69007 Lyon(FR)**

(72) Inventeur: **El Morabit, M'hamed**
**46 boulebard du 11 novembre 1918**
**F-69100 Villeurbanne(FR)**

(72) Inventeur: **Micheaux, Dominique**
**18 rue des Lins**
**F-38230 Villette d'Anthon(FR)**

(72) Inventeur: **Dalibard, Gérard**
**109 rue de Ville d'Avray**
**F-92310 Sevres(FR)**

(74) Mandataire: **Weinmiller, Jürgen et al,**
**Zeppelinstrasse 63**
**D-8000 München 80(DE)**

(54) **Grille pour plaque d'accumulateur éléctrique, procédé de fabrication d'une telle grille, plaque d'accumulateur et accumulateur comportant un tel materiau.**

(57) La grille (10) comporte un tissu présentant une contexture lâche, constitué d'une part de faisceaux de fils conducteurs ou rendus conducteurs formant le dessin des barreaux (7, 8) et du collecteur de courant (9) et d'autre part de faisceaux de fils non conducteurs assurant notamment le positionnement et le maintien des fils conducteurs les uns par rapport aux autres, lesdits faisceaux de fils conducteurs ou rendus conducteurs étant noyés dans une matrice d'au moins un métal choisi dans le groupe formé par le plomb, le cuivre, le cadmium et le nickel.

Applications: plaques d'accumulateurs

EP 0 085 400 A1

./...

Croydon Printing Company Ltd.

FIG.3

Grille pour plaque d'accumulateur électrique, procédé de fabrication d'une telle grille, plaque d'accumulateur et accumulateur comportant un tel matériau

La présente invention concerne les grilles pour plaques d'accumulateur.

Elle s'applique, en particulier, aux grilles utilisées comme support de matière active dans les plaques négative des accumulateurs au plomb.

On sait que les grilles d'un accumulateur électrique au plomb remplissent principalement deux fonctions : la conduction du courant électrique et la sustentation de la matière active. Elles doivent en outre présenter une bonne résistance à la corrosion en milieu acide sulfurique afin d'assurer à l'accumulateur une longue durée de vie. Si de plus le matériau qui les compose possède une forte surtension d'hydrogène, l'entretien de l'accumulateur peut être très réduit ou nul.

D'un point de vue chimique et électrochimique, le plomb doux est un très bon matériau pour la réalisation des grilles négatives, mais son emploi est limité par ses très mauvaises propriétés mécaniques.

C'est pourquoi la plupart des grilles classiques sont fabriquées en alliages de plomb beaucoup plus performants sur le plan mécanique que le plomb pur. Cependant, l'utilisation de ces alliages conduit à des grilles relativement lourdes dans lesquelles les propriétés chimiques et électrochimiques du plomb doux ne sont pas intégralement conservées, notamment en ce qui concerne la surtension d'hydrogène ou l'autodécharge, et ceci peut constituer un handicap, en particulier dans les batteries de démarrage ou de traction.

Il a également été proposé de fabriquer des grilles en revêtant un support plastique par un matériau conducteur, mais il se pose alors un problème de soudure de la queue de grille au collecteur de courant.

Si l'on peut également réaliser des grilles en liant par couture des fils conducteurs à un feutre inerte, ou en utilisant des fibres d'alumine spécialement traitées et imprégnées par du plomb, de telles solutions font cependant appel à des opérations relativement complexes, mal adaptées à une fabrication industrielle en continu.

Il est enfin connu, en particulier par le brevet américain n° 4 134 192, de constituer des grilles par des tissus obtenus par tissage de fils isolants et comprenant des fils conducteurs entrelacés, selon la chaîne et/ou la trame ; toutefois les grilles ainsi réalisées ne présentent pas des propriétés mécaniques suffisantes, notamment en ce qui concerne la rigidité.

La présente invention permet notamment de remédier aux inconvénients précités.

Elle a notamment pour but une grille présentant des caractéristiques mécaniques remarquables, ainsi qu'une grande légèreté.

L'invention a pour objet une grille pour plaque d'accumulateur électrique, comportant deux jeux de barreaux conducteurs orthogonaux et un collecteur de courant, caractérisé par le fait qu'elle comprend un tissu présentant une contexture lâche, constitué d'une part de faisceaux de fils conducteurs ou rendus conducteurs formant le dessin des barreaux et du collecteur de courant et d'autre part de faisceaux de fils non conducteurs assurant notamment le positionnement et le maintien des fils conducteurs les uns par rapport aux autres, lesdits faisceaux de fils conducteurs ou rendus conducteurs étant noyés dans une matrice d'au moins un métal choisi dans le groupe formé par le plomb, le cuivre le cadmium et le nickel.

L'invention a également pour objet un procédé de fabrication d'une grille, se caractérisant par le fait que dans un premier temps on effectue le tissage dudit tissu, puis on effectue un dépôt électrolytique de métal sur les faisceaux de fils conducteurs ou rendus conducteurs, et on procède au découpage de la grille après avoir éventuellement réalisé un laminage.

Dans les grilles conformes à l'invention les fils conducteurs ou rendus conducteurs formant les faisceaux sont eux mêmes noyés individuellement dans la matrice. C'est cette imprégnation des faisceaux dans leur épaisseur qui est à l'origine des propriétés mécaniques particulièrement satisfaisantes des grilles. De telles propriétés ne pourraient, en particulier, être obtenues si les faisceaux n'étaient munis que d'un revêtement métallique externe.

L'invention s'étend bien entendu aussi aux plaques d'accumulateur comprenant de telles grilles ainsi qu'aux accumulateurs électriques comportant de telles plaques.

Selon un mode de réalisation de l'invention, dans le tissu, les faisceaux de fils non conducteurs sont disposés essentiellement selon la trame du tissu.

Avantageusement les faisceaux de fils conducteurs, ou rendus conducteurs, selon la trame du tissu, sont enserrés par des fils non conducteurs assurant la consolidation du tissu. On peut également utiliser des fils conducteurs dans ce but.

La distance entre deux faisceaux voisins parallèles de fils conducteurs, ou rendus conducteurs, est de préférence comprise entre 1,5 et 4,5 cm, et de préférence entre 2 et 3 cm.

Le nombre de faisceaux de fils non conducteurs par centimètre disposés selon la trame du tissu entre deux faisceaux voisins parallèles de fils conducteurs ou rendus conducteurs est de préférence compris entre 3 et 6.

Les grilles selon l'invention permettent de conserver l'excellent comportement chimique et électrochimique du plomb pur tout en obtenant un allègement très important par rapport aux grilles classiques en alliages de plomb. En effet, dans les grilles selon l'invention, l'essentiel des propriétés mécaniques nécessaires à la sustentation de la matière active est apporté par les fibres à hautes caractéristiques mécaniques spécifiques ; le plomb n'assure pratiquement plus qu'une fonction de conduction électronique qui ne nécessite qu'une faible quantité de matière dans le cas de grilles négatives puisque la masse active est conductrice. Par ailleurs, le plomb peut être remplacé, partiellement ou totalement par du cuivre de conductivité électronique très supérieure, et un gain de poids supplémentaire peut alors être réalisé. Les principales caractéristiques de ces grilles composites, et en particulier leur faible poids, les destinent préférentiellement à une utilisation dans des batteries de traction de véhicules électriques.

Les fibres conductrices qui conviennent particulièrement bien dans les grilles selon l'invention sont les fibres de carbone du fait de leurs performances mécaniques élevées et de leur bonne tenue en présence d'acide sulfurique. On peut également utiliser des fibres non conductrices rendues superficiellement conductrices de l'électricité par des traitements mécaniques, physiques ou chimiques connus, par exemple guipage par un fil conducteur, dépôt de métal par évaporation sous vide ou projection de plasma, placage chimique, etc... à condition toutefois que ces fibres non conductrices résistent à la corrosion en milieu acide sulfurique et que le traitement destiné à les rendre conductrices permette effectivement d'obtenir ultérieurement sur ces fibres, après tissage, un dépôt électrolytique adhérent, uniforme et continu de plomb ou de cuivre ou d'un autre métal. On peut citer par exemple des fibres de verre ou de carbure de silicium métallisées au cuivre ou au plomb.

Les fibres non conductrices que l'on peut utiliser sont de préférence des fibres de verre, d'alumine ou de nitrure de bore, ou des fibres analogues à condition également de présenter une bonne résistance chimique en milieu acide sulfurique. Ces fibres non conductrices assurent deux fonctions dans le tissu : elles lui donnent la cohésion suffisante pour qu'il puisse subir sans dommage le traitement de déposition métallique par électrolyse et elles constituent après empâtage des grilles un renfort mécanique pour la matière active, tout en favorisant l'empâtage.

Le dépôt électrolytique métallique est réalisé en continu selon une méthode classique. Le dépôt se fait donc sélectivement sur les fibres conductrices du tissu, les fibres non conductrices restant intactes, mais se trouvant liées au fibres conductrices aux points d'intersection avec celles-ci. Le dépôt est réalisé non seulement sur la surface externe des faisceaux mais également sur les fils constitutifs desdits faisceaux.

La préforme de grille ainsi obtenue possède alors une bonne conductivité électrique et sa rigidité mécanique est suffisante pour qu'elle puisse subir sans dommage les traitements ultérieurs. Ces traitements consistent en un laminage éventuel à froid ou à chaud dont le but est d'amener l'épaisseur de la préforme à la valeur standard désirée, en un découpage qui permet d'obtenir les grilles individuelles équipées d'une queue de grille, en un calandrage éventuel destiné à donner aux grilles une parfaite planéité. L'épaisseur des grilles obtenues suivant ce procédé est du même ordre de grandeur que celle des grilles en alliages de plomb, soit 0,6 à 1,8 mm. Un important gain de poids par rapport à ces dernières est réalisé par un plus grand espacement des barreaux horizontaux et verticaux, rendu possible par les propriétés mécaniques supplémentaires apportées à la masse active par la présence des faisceaux de fils.

L'invention sera décrite ci-après plus en détail en regard du dessin annexé, relative à différents modes de réalisation de grilles conformes à l'invention.

La figure 1 est une vue schématique d'un premier mode de réalisation de tissu utilisable pour constituer une grille conforme à l'invention.

La figure 2 est une vue agrandie en perspective de la partie II de la figure 1.

La figure 3 est une vue d'une grille réalisée avec le tissu représenté figure 1.

La figure 4 est une vue schématique d'un autre mode de réalisation de tissu par une grille selon l'invention.

La figure 5 est une vue d'une grille réalisée avec le tissu représenté figure 4.

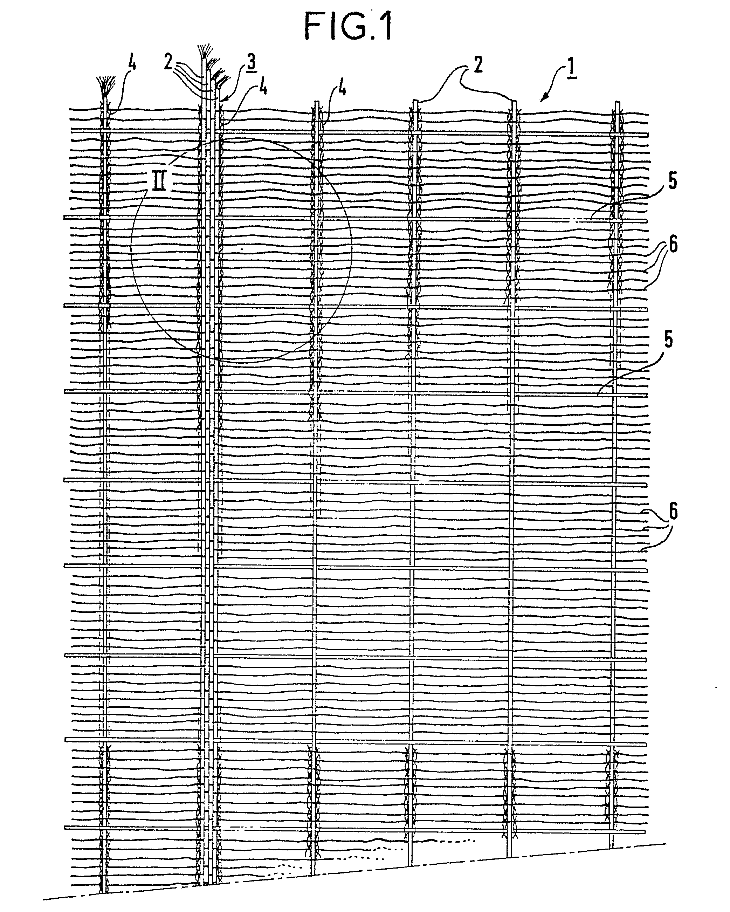

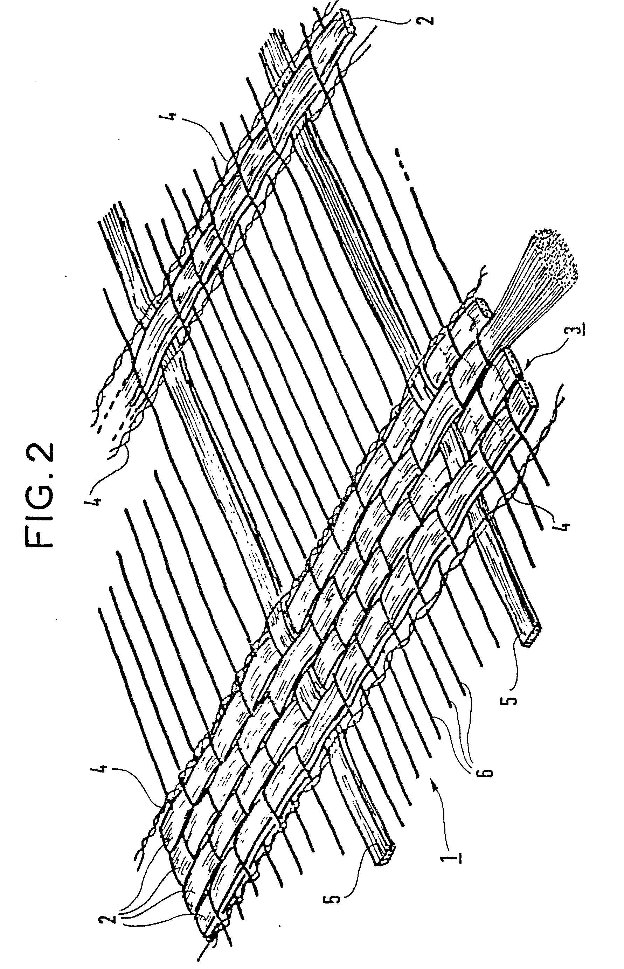

Sur les figures 1 et 2, un tissu 1 entrant dans la structure de la grille conforme à l'invention est constitué de faisceaux de fils conducteurs ou rendus conducteurs et qui forment le dessin des barreaux et du collecteur de courant et de faisceaux de fils non conducteurs.

Dans l'exemple décrit, on a utilisé pour constituer les fils conducteurs des fibres de carbone de type polyacrylo-nitrile (PAN), 400 tex, 6000 brins par fil et, pour constituer les fils non conducteurs, des fibres de verre C, 240 tex.

Le tissu 1 comporte en chaîne d'une part des faisceaux 2 de fils en fibres de carbone régulièrement espacés d'environ 3,4 cm destinés à former les barreaux verticaux de la grille, avec tous les cinq faisceaux, un faisceau élargi 3 groupant quatre faisceaux 2, d'une largeur d'environ 7 mm, destiné à former la queue de grille et d'autre part des fils en fibre de verre 4 enserrant les faisceaux de fils conducteurs 2 et 3, tissés selon une armure gaze et assurant la cohésion du tissu.

Le tissu 1 comporte en trame d'une part des faisceaux 5 de fils conducteurs semblables aux faisceaux 2, régulièrement espacés d'environ 2,6 cm, destinés à former les barreaux horizontaux de la grille, et d'autre part des faisceaux 6 de fils en fibre de verre assurant notamment la cohésion du tissu. Ces fils travaillent dans cet exemple selon une armure toile avec les faisceaux 2.

Dans l'exemple représenté le nombre de faisceaux 6 disposés entre deux faisceaux voisins 5 est de neuf.

Ce tissu est désensimé par chauffage à l'air pendant 15 heures environ vers 300°C, puis, de manière à constituer la grille par dépôt électrolytique de métal, il défile en continu dans une cellule de dépôt équipé d'anodes en plomb et contenant une solution aqueuse de sulfamate de plomb (1 mole/l) et d'acide sulfamique (1 mole/l) additionnée de gélatine (2 g/l). L'électrolyte est maintenu à température ambiante et agité constamment. Avec une densité de courant moyenne de 1 A par $dm^2$ de tissu, on obtient sur les fils conducteurs un dépôt de plomb adhérent, continu et exempt de dendrites. Le tissu ainsi traité est alors rincé à l'eau permutée, séché et laminé à une épaisseur de 1,5 mm avant découpage en grilles de 18 cm de hauteur et 17 cm de largeur.

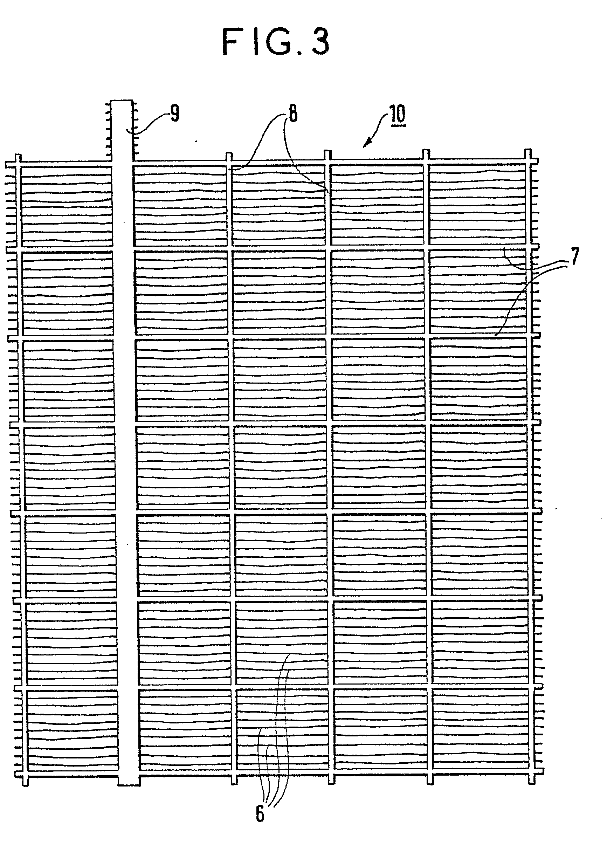

Une telle grille 10 a été représentée sur la figure 3 où les références 7 et 8 désignent respectivement les barreaux horizontaux et verticaux et la référence 9 la queue de grille, obtenus après le dépôt de plomb électrolytique sur les faisceaux 2, 5 et 3 de fils conducteurs.

Les fils non conducteurs 4, qui sont destinés à améliorer la cohésion du tissu 1, n'ont pas été représentés sur la figure 3.

Ces grilles présentent une masse spécifique d'environ 6,5 $g/dm^2$. Elles comportent huit barreaux horizontaux 7 et six barreaux verticaux 8, la queue de grille 9 étant dans le prolongement du deuxième barreau vertical 8 et dépassant de 2 cm environ.

Une grille de même configuration, fabriquée de manière usuelle à partir d'un alliage de plomb, pèse environ 70 g, alors que le poids de la grille décrite, conforme à l'invention est d'environ 20 g, dont 3 g de tissu ce qui met clairement en évidence le gain de poids réalisé.

De plus, le revêtement électrolytique de plomb pur évite le dégagement d'hydrogène lorsque ces grilles sont utilisées pour la fabrication d'électrodes négatives dans des accumulateurs au plomb, après empatage et formation selon les procédés classiques.

On peut également à partir du tissu décrit au regard des figures 1 et 2 réaliser des grilles présentant des caractéristiques différentes.

Ainsi après un désensimage effectué par immersion pendant 4 heures à température ambiante dans l'acide sulfurique concentré, on effectue un dépôt électrolytique de cuivre dans une cellule contenant du sulfate de cuivre (0,75 mole/l), de l'acide sulfurique (0,75 mole/l) et de la gélatine (0,2 g/l). Les grilles obtenues présentent une plus grande rigidité mécanique et une plus grande conductivité électrique que les grilles revêtues de plomb.

On peut également utiliser pour constituer les fils conducteurs des fibres en carbure de silicium, de 200 tex par exemple. Toutefois, ces fibres ne sont pas suffisamment conductrices par elles-même pour être directement revêtues de métal par dépôt électrolytique. Aussi une fois que le tissu a été fabriqué, on soumet celui-ci, après désensimage, par exemple par chauffage vers 300°C pendant 15 heures sous atmosphère d'argon, à un placage chimique, par exemple par le cuivre, selon les techniques usuelles. Ce placage ne s'applique que sur les fibres de carbure de silicium, qui sont ainsi rendues conductrices, les fibres de verre restant intactes.

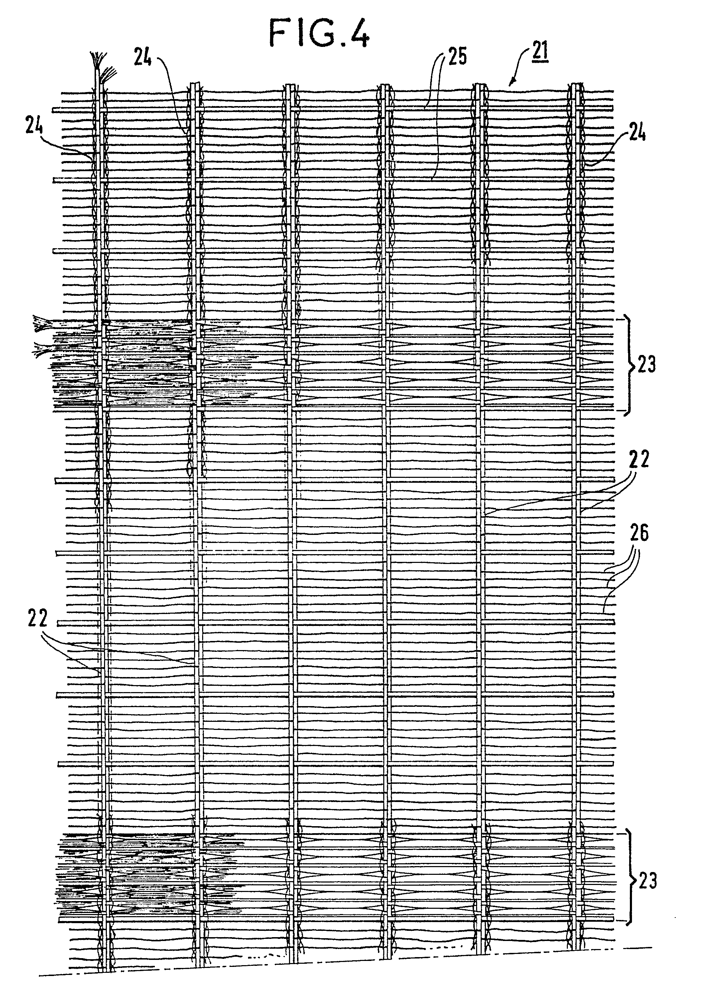

La figure 4 est une vue schématique d'un autre mode de réalisation de tissu utilisable pour constituer une grille conforme à l'invention.

Les fils conducteurs et non conducteurs sont de même nature que dans le cas de l'exemple représenté figures 1 et 2.

Le tissu 21 comporte en chaîne d'une part des faisceaux 22 de fils en fibres de carbone présentant une largeur double par rapport aux faisceaux 2 de la figure 1, régulièrement espacés, d'environ 3 cm, destinés à former les barreaux verticaux de la grille et d'autre part des fils en fibre de verre 24 enserrant les faisceaux 22, tissés selon une armure gaze et assurant la cohésion du tissu.

Le tissu 21 comporte en trame des faisceaux 25 de fils en fibre de carbone, présentant une largeur égale à celle des faisceaux 2 de la figure 1, régulièrement espacés, d'environ 2 cm, destinés à former les barreaux horizontaux de la grille, et, tous les six faisceaux 25, un faisceau 23 élargi, d'environ 3,3 cm correspondant environ à dix faisceaux 25 et constituant un renfort dans lequel est découpée la queue de grille.

Le tissu 21 comporte également en trame des faisceaux 26 de fils en fibre de verre assurant notamment la cohésion du tissu.

Dans l'exemple représenté, le nombre de faisceaux 26 disposés entre deux faisceaux voisins 25 est de sept.

Le tissu 21 est ensuite traité d'une manière analogue au tissu 1, le revêtement électrolytique de plomb étant effectué dans les mêmes conditions. Le tissu est découpé en grilles de 12 cm de hauteur et de 15 cm de largeur, qui présentent une masse spécifique d'environ 12 g/dm$^2$.

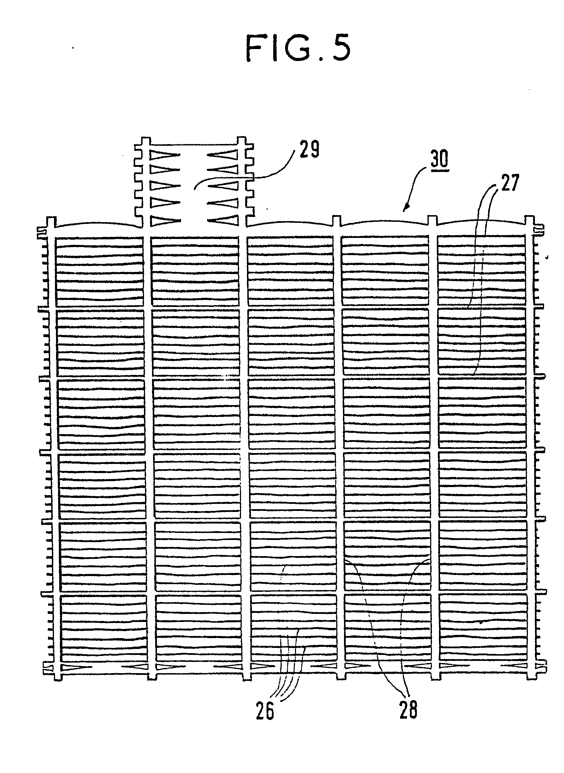

Une telle grille 30 a été représentée sur la figure 5 où les références 27 et 28 désignent respectivement les barreaux horizontaux et verticaux et la référence 29 la queue de grille obtenus après métallisation des faisceaux 22, 25 et 23.

Les fils non conducteurs 24, qui étaient destinés à améliorer la cohésion du tissu 21 n'ont pas été représentés sur la figure 5.

La grille comporte sept barreaux horizontaux 27 et six barreaux verticaux 28, la queue de grille 29 étant découpée dans le prolongement des deuxième et troisième barreaux verticaux 28 et dépassant de 3 cm environ.

Le poids du tissu correspondant à cette grille est d'environ 3,4 g alors que le poids de la grille est d'environ 21 g.

Les propriétés mécaniques particulières des grilles conformes à l'invention, dans lesquelles les faisceaux de fils conducteurs ou rendus conducteurs sont noyés dans une matrice métallique, comparées à celles des grilles réalisées à partir de plomb doux ou d'alliages de plomb, tel qu'un alliage plomb-antimoine par exemple, s'expliquent lorsqu'on considère les caractéristiques mécaniques de ces différents matériaux constitutifs. Ainsi, la résistance à la rupture TR, mesurée en MPa, est de 13,7 pour du plomb doux, 18 pour un alliage plomb-antimoine à 1,8% en antimoine, 200 pour un matériau composite Pb/Si C comportant en volume 12% de fibres de Si C, 350 pour un matériau composite Pb/Si C comportant en volume 18% de fibres de Si C, 330 pour un matériau composite Pb/C comportant en volume 25% de fibres de carbone.

Parallèlement, l'allongement à la rupture est beaucoup plus faible avec les matériaux composites. Le pourcentage est de 1, alors qu'avec le plomb doux il est de 27 et d'environ 40 avec l'alliage plomb-antimoine.

Enfin, on a pu noter que ces matériaux composites ont un comportement quasi élastique jusqu'à un niveau de contraintes d'au moins 1/2 TR.

Les grilles conformes à l'invention sont utilisées pour constituer des plaques d'accumulateurs par empatage puis formation selon les techniques usuelles. Dans le cas où le tissu est revêtu électrolytiquement de plomb, on peut en particulier réaliser des plaques négatives pour accumulateurs au plomb.

On a pu constater qu'après 250 cycles charge-décharge, les grilles conformes à l'invention n'avaient subi aucune altération. En particulier la présence des faisceaux de fils non conducteurs 4, 24 permet d'assurer un excellent maintien de la matière active.

Pour obtenir une meilleure cohésion du tissu, on pourrait utiliser à la place de deux paires de fils non conducteurs, travaillant en armure gaze de chaque côté des fils conducteurs longitudinaux, un seul fil non conducteur travaillant en armure gaze comme fil de tour, directement avec le fil conducteur, ce dernier étant le fil droit.

De manière à obtenir un revêtement métallique électrolytique uniforme, il est souhaitable, dans ce cas, que les fils constituant un tel guipage soient conducteurs, ou rendus conducteurs.

De plus, s'il peut être envisagé d'entrecroiser les fils conducteurs de manière à ce qu'ils forment entre eux un tissu conventionnel, on a constaté qu'il était cependant avantageux de réaliser le tissu de manière qu'ils ne soient pas entrecroisés mais simplement superposés leur liaison étant obtenue par tissage avec les fils non conducteurs.

REVENDICATIONS

1/ Grille pour plaque d'accumulateur électrique comportant deux jeux de barreaux conducteurs orthogonaux et un collecteur de courant, caractérisée par le fait qu'elle comprend un tissu (1, 21) présentant une contexture lâche, constitué d'une part de faisceaux de fils conducteurs ou rendus conducteurs (2, 5, 3, 22, 25, 23) formant le dessin des barreaux (7, 8, 27, 28) et du collecteur de courant (9, 29) et d'autre part de faisceaux de fils non conducteurs (6, 26) assurant notamment le positionnement et le maintien des fils conducteurs les uns par rapport aux autres, lesdits faisceaux de fils conducteurs ou rendus conducteurs (2, 5, 3, 22, 25, 23) étant noyés dans une matrice d'au moins un métal choisi dans le groupe formé par le plomb, le cuivre, le cadmium et le nickel.

2/ Grille selon la revendication 1, caractérisée par le fait que le métal constitutif de la matrice est d'origine électrolytique.

3/ Grille selon l'une des revendications 1 et 2, caractérisée par le fait que les faisceaux de fils non conducteurs (6, 26) sont disposés essentiellement selon la trame du tissu.

4/ Grille selon l'une des revendications 1 à 3, caractérisée par le fait que, selon la chaine du tissu, les faisceaux de fils conducteurs ou rendus conducteurs (2, 3, 22, 23) sont enserrés par des fils non conducteurs (4, 24) travaillant avec les fils de trame selon une armure gaze et assurant la consolidation du tissu (1, 21).

5/ Grille selon l'une des revendications 1 à 3, caractérisée par le fait que selon la chaine du tissu, les faisceaux de fils conducteurs ou rendus conducteurs (2, 3, 22, 23) sont enserrés par des fils conducteurs assurant la consolidation du tissu (1, 21).

6/ Grille selon l'une des revendications 1 à 5, caractérisée par le fait que selon l'une des directions du tissu, au moins certains des faisceaux de fils conducteurs ou rendus conducteurs (3, 22) sont plus larges que selon l'autre direction.

7/ Grille selon l'une des revendications 1 à 6, caractérisée par le fait que la distance entre deux faisceaux voisins parallèles de fils conducteurs (2, 3, 5, 22, 25, 23) ou rendus conducteurs est comprise entre 1,5 cm et 4,5 cm.

8/ Grille selon la revendication 3, caractérisée par le fait que le nombre de faisceaux de fils non conducteurs (6, 26) par centimètre, disposés selon la trame du tissu entre deux faisceaux voisins parallèles de fils conducteurs ou rendus conducteur (2, 3, 5, 22, 25, 23) est compris entre 3 et 6.

9/ Grille selon l'une des revendications 1 à 8, caractérisée par le fait que les fils non conducteurs sont à base de fibres de verre résistant à l'acide sulfurique.

10/ Grille selon l'une des revendications 1 à 9, caractérisée par le fait que les fils conducteurs ou rendus conducteurs sont choisis parmi les fils à base de fibres de carbone, de fibres de carbure de silicium métallisées ou de fibres de verre métallisés.

11/ Procédé de fabrication d'une grille pour plaque d'accumulateur, caractérisé par le fait que, dans un premier temps, on effectue le tissage d'un tissu (1, 21) conformément aux revendications 1 à 10, puis on effectue un dépôt électrolytique d'au moins un métal choisi dans le groupe formé par le cuivre, le plomb, le cadmium et le nickel sur les faisceaux de fils conducteurs ou rendus conducteurs (2, 3, 5, 22, 25, 23) du tissu, et en ce qu'on procède au découpage de la grille (10, 30) après avoir éventuellement réalisé un laminage.

12/ Plaque d'accumulateur électrique et accumulateur comportant une grille selon l'une des revendications 1 à 10.

FIG.1

FIG.2

# FIG.3

0085400

4/5

FIG.4

# FIG.5

Office européen
des brevets

**RAPPORT DE RECHERCHE EUROPEENNE**

0085400

Numéro de la demande

EP 83 10 0751

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,Y | US-A-4 134 192 (PARKINSON) * Revendications 1,2,6; colonne 6, lignes 54-65; colonne 7, lignes 6-23 * | 1-4 | H 01 M 4/74 |
| Y | US-A-4 192 049 (PARKINSON) * Revendications 1,2 * | 1-4 | |
| Y | GB-A- 747 962 (BREMAN) * Revendications 1-7 * | 1,8,9 | |
| A | DE-A- 475 242 (I.G. . FARBENINDUSTRIE AG) * En entier * | 10,11 | |
| | | | **DOMAINES TECHNIQUES RECHERCHES (Int. Cl. ³)** |
| | | | H 01 M |

Le présent rapport de recherche a été établi pour toutes les revendications

| Lieu de la recherche LA HAYE | Date d'achèvement de la recherche 21-03-1983 | Examinateur STANGE R.L.H |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

—————————————

& : membre de la même famille, document correspondant

OEB Form 1503 03.82